(19) **Europäisches Patentamt / European Patent Office / Office européen des brevets**

(11) **EP 2 708 612 A1**

(12) **EUROPEAN PATENT APPLICATION**
published in accordance with Art. 153(4) EPC

(43) Date of publication:
**19.03.2014 Bulletin 2014/12**

(21) Application number: **12782769.9**

(22) Date of filing: **11.05.2012**

(51) Int Cl.:
**C22C 38/00** (2006.01)  **B60G 21/055** (2006.01)
**C21D 9/02** (2006.01)  **C22C 38/58** (2006.01)
**C22C 38/60** (2006.01)  **F16F 1/02** (2006.01)

(86) International application number:
**PCT/JP2012/062106**

(87) International publication number:
**WO 2012/153831 (15.11.2012 Gazette 2012/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2011  JP 2011107513**

(71) Applicants:
• **NHK Spring Co., Ltd.**
  **Yokohama-shi, Kanagawa 236-0004 (JP)**
• **JFE Bars & Shapes Corporation**
  **Tokyo 105-0004 (JP)**

(72) Inventors:
• **TANGE, Akira**
  **Kanagawa 236-0004 (JP)**

• **KURIMOTO, Kiyoshi**
  **Kanagawa 236-0004 (JP)**
• **GOTO, Yurika**
  **Kanagawa 236-0004 (JP)**
• **KIKUCHI, Katsuhiko**
  **Miyagi-ken 983-0001 (JP)**
• **TOMITA, Kunikazu**
  **Miyagi-ken 983-0001 (JP)**
• **FUKUOKA, Kazuaki**
  **Miyagi-ken 983-0001 (JP)**
• **HATTORI, Kazuaki**
  **Miyagi-ken 983-0001 (JP)**

(74) Representative: **Zech, Stefan Markus et al**
  **Meissner, Bolte & Partner GbR**
  **Postfach 86 06 24**
  **81633 München (DE)**

(54) **STEEL FOR AUTOMOTIVE SUSPENSION SPRING COMPONENT, AUTOMOTIVE SUSPENSION SPRING COMPONENT, AND MANUFACTURING METHOD FOR SAME**

(57)    Disclosed is steel, excellent in corrosion resistance and low-temperature toughness, for a vehicle suspension spring part, characterized in that it comprises 0.15 to 0.35% by mass of C, more than 0.6% by mass but 1.5% by mass or less of Si, 1 to 3% by mass of Mn, 0.3 to 0.8% by mass of Cr, 0.005 to 0.080% by mass of sol. Al, 0.005 to 0.060% by mass of Ti, 0.005 to 0.060% by mass of Nb, not more than 150 ppm of N, not more than 0.035% by mass of P, not more than 0.035% by mass of S, 0.01 to 1.00% by mass of Cu, and 0.01 to 1.00% by mass of Ni, the balance consisting of Fe and unavoidable impurities, with Ti + Nb ≤ 0.07% by mass, and has a tensile strength of not less than 1,300 MPa.

FIG. 1

**Description**

Technical Field

The present invention relates to steel usable for vehicle suspension spring parts such as a stabilizer and leaf spring mainly used in automobiles, the spring parts, and a method of fabricating the same, and more particularly, to a vehicle suspension spring part which has a high tensile strength of 1,300 MPa or more and is excellent in corrosion resistance and low-temperature toughness.

Background Art

A stabilizer is a kind of a suspension spring part having a function of preventing rolling when a vehicle turns. On the other hand, a leaf spring is a suspension spring part which is used as a suspension spring of a truck and guarantees running stability on bumpy roads. Both of them receive the repetitive load of stress when exposed to natural environments, and hence readily corrode, cause setting, and are exposed to low temperatures of -50°C to -30°C in some local areas. Accordingly, it is required that the characteristics such as the corrosion resistance, setting resistance and low-temperature toughness be high.

Carbon steels for machine structures such as JIS S48C and spring steels such as JIS G4801 SUMP9 are used as the materials of these parts, and the manufacturing steps of these steels are as follows. For example, a hot-rolled steel material is cut into predetermined dimensions, bent by hot forming, and adjusted to have a predetermined strength and predetermined toughness by a thermal refining process performed by hardening and tempering. Thereafter, shot peening is performed on the surface as needed, and the steel is finally subjected to a coating step for corrosion protection and then used.

Demands for decreasing the weights of recent automobiles by increasing the strength of chassis parts for the purpose of increasing the fuel efficiency are more and more increasing, and high-strength materials having a tensile strength of 1,000 MPa or more have been developed for both the stabilizer and leaf spring. The present inventors have also proposed a stabilizer having a tensile strength of 1,100 MPa or more in Jpn. Pat. Appln. KOKAI Publication No. 2010-185109.

Unfortunately, the weights of the vehicle suspension spring parts such as the stabilizer and leaf spring are further being reduced in order to increase the fuel efficiency. For this purpose, a tensile strength of 1,100 MPa or more is insufficient, and it has become necessary to further increase the strength. Generally, the ductility-toughness of a steel material deteriorates if the strength of the material is simply increased. When the ductility-toughness deteriorates, the crack propagation resistance further decreases, and the risk of breakage further increases. Also, the leaf spring and stabilizer are coated in order to secure the corrosion protection performance, but they are exposed outside the vehicle due to the structure of the vehicle, so stones and the like hit these parts during maneuvering, thereby easily making dents in these parts or peeling the coating of these parts. This poses the possibility that corrosion progresses from a portion from which the coating is removed, and the propagation of a fatigue crack starting from this corroded portion breaks the part. Therefore, it is essential to increase the strength and suppress the decrease in ductility-toughness at the same time. It is particularly very important to improve the toughness at low temperatures (low-temperature toughness) in winter during which the corrosive environment becomes severe.

Summary of the Invention

Problem to Be Solved by the Invention

It is an object of the present invention to provide steel for a vehicle suspension spring part having a tensile strength of 1,300 MPa or more, which is higher than those of conventional products, and also having a high corrosion resistance and high low-temperature toughness, and also provide a vehicle suspension spring part and a method of fabricating the same.

Means for Solving the Problem

According to a first aspect of the invention, there is provided steel, excellent in corrosion resistance and low-temperature toughness, for a vehicle suspension spring part, characterized in that it comprises 0.15 to 0.35% by mass of C, more than 0.6% by mass but 1.5% by mass or less of Si, 1 to 3% by mass of Mn, 0.3 to 0.8% by mass of Cr, 0.005 to 0.080% by mass of sol. Al, 0.005 to 0.060% by mass of Ti, 0.005 to 0.060% by mass of Nb, not more than 150 ppm of N, not more than 0.035% by mass of P, not more than 0.035% by mass of S, 0.01 to 1.00% by mass of Cu, and 0.01 to 1.00% by mass of Ni, the balance consisting of Fe and unavoidable impurities, with Ti + Nb $\leq$ 0.07% by mass, and has a tensile strength of not less than 1,300 MPa.

According to a second aspect of the invention, there is provided a method of fabricating a vehicle suspension spring part characterized by comprising:

hot-forming or cold-forming steel into a shape of a spring part, the steel comprising 0.15 to 0.35% by mass of C, more than 0.6% by mass but 1.5% by mass or less of Si, 1 to 3% by mass of Mn, 0.3 to 0.8% by mass of Cr, 0.005 to 0.080% by mass of sol. Al, 0.005 to 0.060% by mass of Ti, 0.005 to 0.060% by mass of Nb, not more than 150 ppm of N, not more than 0.035% by mass of P, not more than 0.035% by mass of S, 0.01 to 1.00% by mass of Cu, and 0.01 to 1.00% by mass of Ni, the balance consisting of Fe and unavoidable impurities, with Ti + Nb $\leq$ 0.07% by mass; and

hardening the formed product with reheating of the formed product by furnace heating, high-frequency induction heating or electrical heating to cause, after the hardening, its crystal grains to fall within a range of 7.5 to 10.5 as a prior austenite grain size number, thereby providing a spring part having a tensile strength of not less than 1,300 MPa, and excellent high corrosion resistance and a low-temperature toughness.

According to a third aspect of the invention, there is provide a vehicle suspension spring part characterized in that it is manufactured by hot-forming, or cold-forming steel into a shape of a spring part, the steel comprising 0.15 to 0.35% by mass of C, more than 0.6% by mass but 1.5% by mass or less of Si, 1 to 3% by mass of Mn, 0.3 to 0.8% by mass of Cr, 0.005 to 0.080% by mass of sol. Al, 0.005 to 0.060% by mass of Ti, 0.005 to 0.060% by mass of Nb, not more than 150 ppm of N, not more than 0.035% by mass of P, not more than 0.035% by mass of S, 0.01 to 1.00% by mass of Cu, and 0.01 to 1.00% by mass of Ni, the balance consisting of Fe and unavoidable impurities, with Ti + Nb $\leq$ 0.07% by mass, and hardening the formed product with reheating of the formed product by furnace heating, high-frequency induction heating or electrical heating to cause, after the hardening, its crystal grains to fall within a range of 7.5 to 10.5 as a prior austenite grain size number, and has a tensile strength of not less than 1,300 MPa, and excellent high corrosion resistance and a low-temperature toughness.

Brief Description of Drawings

FIG. 1 is a perspective view schematically illustrating an outline of a shape of a stabilizer.
FIG. 2 shows step diagrams in which (1) is a step diagram when fabricating the stabilizer by a cold-forming process, and (2) and (3) are step diagrams when fabricating the stabilizer by a hot-forming process.

Mode for Carrying Out the Invention

The present inventors made extensity studies and obtained the following findings. That is, a vehicle suspension spring part requires a high strength, and also requires improvements in ductility-toughness and corrosion resistance as described below.

(i) First, to improve the corrosion resistance of a material, it is desirable to limit the generation amount of a carbonitride that readily forms a corrosion pit. More specifically, to improve the corrosion resistance, it is effective to decrease the carbon content, adjust the addition amount of an alloying element such as Ti or Nb that readily forms a carbonitride, and add an appropriate amount of a corrosion-resistant alloying element such as Cu or Ni.

(ii) Also, to achieve both a high strength and high ductility-toughness, it is effective to manufacture low-carbon-content steel, and refine the crystal grains by a carbonitride. However, it has been found that when the crystal grains are refined too much, the hardenability decreases, and a tensile strength of 1,300 MPa can not be obtained. Therefore, it has been found that the hardenability can be ensured and the deterioration of the ductility-toughness can by suppressed by limiting the range of the grain size and limiting the addition amount of a carbonitride-forming element that controls the grain size.

(iii) Furthermore, to obtain a tensile strength of 1,300 MPa or more by hardening, the carbon content must be made higher than that when obtaining a tensile strength of 1,100 MPa or more. However, if carbon is excessively added, the carbide deteriorates the ductility-toughness, and quench cracking readily occurs, so the part strength decreases. Therefore, it is necessary to confine the carbon content to an appropriate range in order to increase the strength without excessively decreasing the ductility-toughness.

In addition, when the carbon content is increased, the corrosion resistance decreases to allow easy formation of corrosion holes, deteriorating the durability. The present inventors made extensive studies on this matter, and found that it is possible to achieve a high corrosion resistance in addition to a high strength and high toughness by further limiting the range of Cr among carbide generating alloying elements and controlling the crystal grains at the same time.

The present invention has been made based on the above findings.

That is, the present invention makes it possible to provide steel for a high-strength stabilizer or leaf spring used in a vehicle, which has a high tensile strength of 1,300 MPa or more and has a high corrosion resistance and high low-temperature toughness even in a frigid corrosive environment, a method of fabricating the same, and the part, and can greatly contribute to decreasing the weights of automobiles by increasing the strength of the part, thereby increasing the fuel efficiency and improving the global environment.

The functions of component elements of the steel for a vehicle suspension spring part according to the present invention and the reasons for restricting the manufacturing conditions and the like will be explained below. Note that the following percentage indicates% by mass unless otherwise specified.

(1) C: 0.15% to 0.35%

C is an element required for steel to secure a predetermined strength, and 0.15% or more of C is necessary to ensure a tensile strength of 1,300 MPa or more. However, if the content of C exceeds 0.35%, the carbide becomes surplus, decreasing both the corrosion resistance and toughness too much. Accordingly, the upper limit of the C content is set at 0.35%. In the present invention, a steel material having a low carbon content is used as the material of the stabilizer and leaf spring. This prevents quench cracking feared in the conventional steel material manufacturing methods, and improves the corrosion resistance, thereby further increasing the safety of the stabilizer and leaf spring.

(2) Si: more that 0.6%, but 1.5% or less (0.6% < Si ≤ 1.5%)

Si is important as a deoxidizer during ingot making. Also, it is an element effective for solid-solution strengthening, and hence is an element important for increasing the strength. To achieve the effects, Si must be added in an amount exceeding 0.6%. On the other hand, the toughness decreases if the Si content exceeds 1.5%, so the upper limit of the Si content is set at 1.5%.

(3) Mn: 1% to 3%

Mn is an element that improves the hardenability and is effective as a solid-solution strengthening element, and is important for securing the strength of low-carbon steel. Mn, is also important as an element that refines the structure and improves the ductility-toughness. To achieve the effects, it is necessary to add 1% or more of Mn. On the other hand, if Mn is added in an amount exceeding 3%, the amount of carbide that precipitates from low temperatures during tempering becomes surplus, decreasing both the corrosion resistance and toughness. Accordingly, the upper limit of the Mn content is set at 3%.

(4) Cr: 0.3% to 0.8%

Cr increases the strength by improving the hardenability, but affects the corrosion resistance as well. To ensure a tensile strength of 1,300 MPa or more, it is necessary to add 0.3% or more of Cr. However, if the addition amount exceeds 0.8%, a Cr-containing carbide excessively precipitates during tempering, extremely decreasing the corrosion resistance. Therefore, the upper limit of the Cr content is set at 0.8%.

(5) Al: 0.005% to 0.080%

Al is an element important as a deoxidizer during ingot making. To achieve the effect, it is necessary to add 0.005% or more of Al. On the other hand, if the addition amount of Al exceeds 0.080%, an oxide and nitride become surplus, decreasing both the corrosion resistance and toughness. Therefore, the upper limit of the Al content is set at 0.080%.

(6) Ti: 0.005% to 0.060%

Ti is an element effective for improving the strength and refining the crystal grains by forming a carbonitride in steel. To achieve these effects, it is necessary to add 0.005% or more of Ti. On the other hand, if the addition amount of Ti exceeds 0.060%, a carbonitride becomes surplus, decreasing both the corrosion resistance and toughness. Accordingly, the upper limit of the Ti content is set at 0.060%.

(7) Nb: 0.005% to 0.060%

Nb is an element effective for improving the strength and refining the structure by forming a carbonitride in steel. To achieve these effects, it is necessary to add 0.005% or more of Nb. On the other hand, if the addition amount of Nb exceeds 0.060%, a carbonitride becomes surplus, decreasing both the corrosion resistance and ductility-toughness. Accordingly, the upper limit of the Ti content is set at 0.060%.

(8) Ti + Nb: 0.07% or less

Ti and Nb each have the effects of forming a carbonitride in steel and increasing the strength and toughness as described above, and achieve a synergistic effect when added at the same time. On the other hand, if Ti and Nb are excessively added such that the (Ti + Nb) total amount exceeds 0.07%, a carbonitride becomes surplus, decreasing both the corrosion resistance and toughness. Therefore, the (Ti + Nb) total addition amount is controlled to be 0.07% or less.

(9) Cu: 0.01% to 1.00%

Cu is an element effective for improving the corrosion resistance. To achieve the effect, it is necessary to add 0.01% or more of Cu. On the other hand, adding more than 1.00% of Cu is not economical because the effect saturates. In addition, many surface defects occur during hot rolling, and this deteriorates the manufacturability. Accordingly, the upper limit of the Cu content is set at 1.00%.

(10) Ni: 0.01% to 1.00%

Ni is an element that improves the corrosion resistance like Cu, and it is necessary to add 0.01% or more of Ni in order to achieve the effect. On the other hand, adding more than 1.00% of Ni is not economical (Ni is a rare and expensive metal element produced by limited countries) because the effect saturates. Therefore, the upper limit of the Ni content is set at 1.00%.

(11) P: 0.035% or less

P is an impurity element that unavoidably remains or mixes in during the steel-making process, and decreases the toughness by segregating in the crystal grain boundary. Accordingly, the upper limit of the P content is set at 0.035%.

(12) S: 0.035% or less

Like P, S is an impurity element that unavoidably remains or mixes in during the steel-making process, and decreases the toughness by segregating in the crystal grain boundary. In addition, MnS as an inclusion becomes surplus, decreasing both the toughness and corrosion resistance. Therefore, the upper limit of the S content is set at 0.035%.

(13) N: 150 ppm or less

N is an element effective for improving the strength and refining the structure by forming a carbonitride in steel. However, if the addition amount of N exceeds 150 ppm, a carbonitride becomes surplus, decreasing both the toughness and corrosion resistance. Accordingly, the upper limit of the N content is set at 150 ppm.

(14) Other component additive elements

In addition to the above-mentioned additive elements, it is also possible to further add component elements such as Mo, V, B, Ca, and Pb as long as the addition amounts are very small. The effects of the present invention are not particularly obstructed when the addition amounts of these elements are restricted such that Mo: 1% or less, V: 1% or less, B: 0.010% or less, Ca: 0.010% or less, and Pb: 0.5% or less.
Mo is an element effective for improving the hardenability and toughness. However, the effect saturates even when Mo is excessively added. Like Ni, therefore, a maximum addition amount is desirably set at 1% when taking the economy into account.
V is an effective element capable of suppressing the decrease in hardness when steel undergoes a high-temperature tempering process, thereby effectively increasing the softening resistance of the steel. However, V is also a rare element like Ni, so the price stability is low, often leading to a rise in material cost. Therefore, it is desirable to add no V whenever possible, and a maximum addition amount is desirably set at 1%.

B is an element that increases the hardenability of steel when slightly added. The hardenability increasing effect is found until the B addition amount is about 0.010%, but saturates when the B addition amount exceeds 0.010%. Accordingly, a maximum B addition amount is desirably set at 0.010%.

Ca and Pb are elements that improve the machinability of a steel material. When Ca or Pb is added, the drilling workability at the stabilizer end portion further improves.

(15) Limitation on the structure before heating at a rate of 30°C/sec or more during hardening

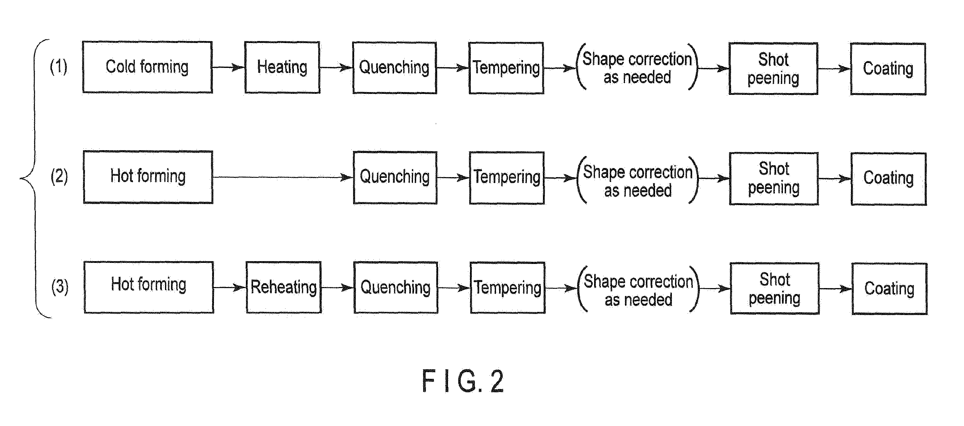

In the present invention, when hardening the stabilizer or leaf spring, a desired strength is obtained by heating it into the austenite region once, and then performing quenching in a cooling medium such as water or oil. If the heating rate is 30°C/sec or more when heating into the austenite region, a long heating hold time is required, leading to a coarse and nonuniform austenite structure and decreasing the toughness of the steel after the hardening, if the structure before the hardening (hereinafter referred to simply as "pre-structure) is a ferrite-perlite structure, since the dissolution of particularly cementite of the perlite structure is slow. Therefore, the pre-structure is limited to a bainite structure, a martensite structure, or a mixed structure thereof, in order to obtain a fine and uniform austenite structure in which the dissolution of a carbide is fast when heated into the austenite region. In the present invention, the stabilizer or leaf spring can be formed either by cold forming or by hot forming, and is not particularly limited. When performing hot forming, a work can be quenched immediately after it is hot-formed as shown in (2) of FIG. 2, or a hot-formed work can be quenched after being reheated as shown in (3) of FIG. 2.

(16) Heating conditions of stabilizer or leaf spring:

When the stabilizer or leaf spring of the present invention is heated by the heating method in the hot forming process by which forming and quenching are performed after heating, the structure is refined, and a sufficient toughness and a tensile strength of 1,300 MPa or more can be obtained by adding appropriate amounts of Ti and Nb even when using the conventional air heating furnace or inert gas atmosphere furnace as a hardening furnace. It is also possible to use a high-frequency induction heating means or direct electrical heating means. However, when performing rapid heating at a heating rate of 30°C/sec or more, desired characteristics can be obtained by limiting the preheating structure as described above. Note that the high-frequency induction heating means includes a high-frequency induction heating coil device having a coil that simply surrounds an object to be heated, in addition to a high-frequency induction heating furnace. Also, the direct electrical heating means includes a direct electrical heating device having two electrode terminals for causing resistance heating by directly supplying an electric current to an object to be heated. Note also that the lower limit of the heating temperature is preferably set at austenization temperature + 50°C, and the upper limit of the heating temperature is preferably less than 1,050°C because a bad influence such as the formation of coarse crystal grains or decarburization may occur if the upper limit is too high.

The same applies in the case where the stabilizer or leaf spring is heated and quenched after cold forming, or when the hot-formed stabilizer or is reheated as needed and then quenched after hot forming.

(17) Prior austenite grain size

In the present invention, a strength level of 1,300 MPa or more is required as a desired strength. To obtain this strength level after hardening or after hardening and tempering, therefore, if crystal grains are refined too much, the hardenability becomes insufficient, and no desired strength is obtained. On the other hand, the ductility-toughness must be secured by performing refining to a predetermined degree or more. The range of refining must be the range of 7.5 to 10.5 as the number of the prior austenite grain size. The range is more preferably 8.5 to 10.5 as the prior austenite grain size number. Note that the grain size was measured in accordance with the specification of JIS G 0551. More specifically, the grain size number was determined by comparing a microscopic observation image with a predetermined standard view in an optical microscopic field having a magnification of 100, each sample was measured in 10 fields, and a measurement value was obtained by calculating the average value. Note that a minimum unit of the standard view is one step of the grain size number, but 0.5 was used if a crystal grain in the microscopic field is intermediate between two standard views. That is, if a crystal grain (observation image) in the microscope field is intermediate between a standard view of grain size number 7 and a standard view of grain size number 8, a grain size number Gh of the crystal grain is determined as 7.5 (see Tables 3 and 4). Note that the prior austenite grain size means the grain size of an austenite structure when it is heated during hardening.

(18) Tempering process

The tempering process after hardening is an arbitrary process in the present invention, and may or may not be performed. This is so because the carbon content in steel is reduced. That is, within the range specified in the present invention, it is sometimes possible to obtain the desired strength and the effects (the corrosion resistance and low-temperature toughness) of the invention even when no tempering process is performed after hardening (even when a temperature rise during coating is taken into account).

Best modes for carrying out the present invention will be explained below with reference to the accompanying drawings and the tables.

(Arrangement of stabilizer)

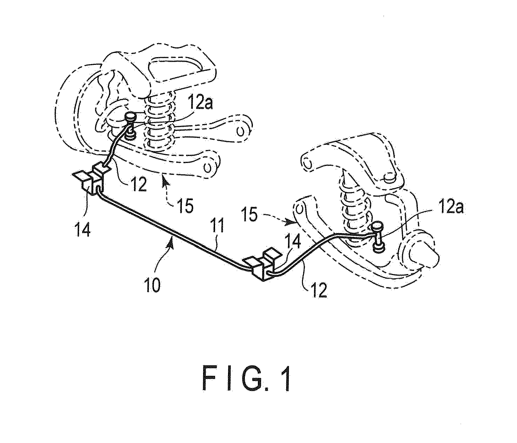

As shown in FIG. 1, a stabilizer 10 includes a torsion part 11 extending in the widthwise direction of a vehicle (not shown), and a pair of left and right arm parts 12 continuing from the torsion part 11 to the two ends. The torsion part 11 is fixed to the vehicle via, e.g., bushes 14. Terminals 12a of the arm parts 12 are connected to left and right suspension mechanisms 15 via, e.g., stabilizer links (not shown). A plurality of portions or ten-odd portions of the torsion part 11 and arm parts 12 are normally bent in order to avoid interference with other parts.

When the vehicle turns, the suspension mechanisms 15 receive vertical inputs of opposite phases, and the left and right arm parts 12 warp in opposite directions to twist the torsion part 11. Thus, the stabilizer 10 functions as a spring that suppresses an excessive inclination (rolling motion) of the vehicle.

(Fabrication Examples of stabilizer)

Fabrication Examples (1) to (3) of various stabilizers will be explained with reference to FIG. 2.

Fabrication Example (1): Cold forming

A round rod was cut into a predetermined length, and cold-bent into a desired shape shown in FIG. 1. After the rod was heated to the austenite temperature region in a heating furnace or by using a resistance heating device or high-frequency heating device, the rod was quenched, and then tempered. The shape was corrected as needed, shot peening was performed, and coating was performed using a desired paint. Note that in the present invention, the tempering process of the above-mentioned fabricating steps can be omitted. Note also that the shape correction step can also be omitted if restraint quenching is performed.

Fabrication Example (2): Direct quenching after hot forming

A round rod was cut into a predetermined length, heated to the austenite temperature region in a heating furnace or by using a resistance heating device or high-frequency heating device, and hot-bent into a desired shape shown in FIG. 1 in this temperature region. Then, the rod was quenched, and then tempered. The shape was corrected as needed, shot peening was performed, and coating was performed using a desired paint. Note that in the present invention, the tempering process of the above-mentioned fabricating steps can be omitted. Note also that the shape correction step can also be omitted if restraint quenching is performed.

Fabrication Example (3): Reheating and quenching after hot forming

A round rod was cut into a predetermined length, heated to the austenite temperature region in a heating furnace or by using a resistance heating device or high-frequency heating device, and hot-bent into a desired shape shown in FIG. 1 in this temperature region. After that, the rod was reheated as needed, quenched, and then tempered. The shape was corrected as needed, shot peening was performed, and coating was performed using a desired paint. Note that in the present invention, the tempering process of the above-mentioned fabricating steps can be omitted. Note also that the shape correction step can also be omitted if restraint quenching is performed.

Examples

Examples of the present invention will be explained below by comparing them with comparative examples with reference to Tables 1 to 4.

Steels having various components shown in Table 1 were melted (150 kg) by test melting, and formed into steel ingots. Then, each ingot was welded to a square billet of 160 mm side, and formed into a material having a diameter of 25 mm by hot rolling. A round-rod specimen having a diameter of 20 mm was sampled from this material, and subjected to a hardening process and tempering process. After that, a tensile test, impact test, corrosion resistance test, and prior austenite grain size test were conducted.

(1) In the hardening process, each steel was heated to austenization temperature $Ac_3$ calculated by using the chemical components of the steel and the following equation + 50°C (the first digit was rounded up) for 30 min, and then quenched. In the tempering process, the tempering temperature was adjusted such that the tensile strength became about 1,500 MPa, and the lowest tempering temperature was set at 180°C. This was because coating was finally performed in the stabilizer fabricating steps, and the material temperature rose to about 180°C in this coating step.

$$Ac_3 \ (°C) = 908 - 2.237 \times \%C \times 100 + 0.4385 \times \%P \times$$
$$1000 + 0.3049 \times \%Si \times 100 - 0.3443 \times \%Mn \times 100 -$$
$$0.23 \times \%Ni \times 100 + 2 \times (\%C \times 100 - 54 + 0.06 \times \%Ni \times$$
$$100) \ (the \ source: \ "Heat \ Treatment \ Technique \ Handbook",$$
$$p. \ 81).$$

(2) The tensile test was conducted by using a JIS No. 4 specimen.

(3) The impact test was conducted at a test temperature of -40°C by using a JIS No. 3 specimen (having a U-notch depth of 2 mm). In Table 2, the evaluation of the low-temperature toughness was "unsatisfactory (symbol X)" when the absorption energy measurement value was less than 40 ($J/cm^2$), and "satisfactory (symbol ○)" when the value was 40 ($J/cm^2$) or more.

(4) In the corrosion resistance test, a 20 mm, $\times$ 50 mm length $\times$ 5 mm thickness plate specimen was sampled from a round rod material thermally treated to have a predetermined strength, and a dry-wet-cycle corrosion test was conducted on a 15 mm width $\times$ 40 mm length region as a corrosion surface in the plate specimen (the rest was masked). After that, the corrosion weight loss was measured.

Note that a total of 10 dry-wet-cycles were conducted wherein one cycle consisted of dipping the specimen in an aqueous 5% NaCl solution at a temperature of 35°C for 8 hours, and then storing the specimen in a vessel held at a temperature of 35°C and a relative humidity of 50% for 16 hours. The corrosion weight loss measurement was performed by measuring the weights before and after the corrosion test, and dividing the measured weights by the corrosion area. Rust removal was performed using an aqueous 20% ammonium hydrogen citrate solution at 80°C. In Table 2, the evaluation of the corrosion resistance was "unsatisfactory (symbol $\times$)" when the value of the corrosion weight loss was 1,000 ($g/m^2$) or more, and "satisfactory (symbol ○)" when the value was less than 1,000 ($g/m^2$).

(5) In the determination of the prior austenite grain size, crystal grains were emerged by the hardening-tempering method (Gh) in accordance with JIS-G-0551, and the determination was conducted by comparison with standard views.

Furthermore, as the durability evaluation of the stabilizer and leaf spring materials, a torsional fatigue test using a rod shape was conducted as the stabilizer material evaluation, and a bending fatigue test using a plate shape was conducted as the leaf spring material evaluation.

In the torsional fatigue test, a rod having a diameter of 20 mm was rolled from each of ingots containing respective components, and cut into a length of 220 mm. Then, electrical-heating hardening and furnace-heating tempering were performed under the temperature conditions shown in Table 2, thereby obtaining a test piece. A corrosion test was conducted on 50-mm long portions extending from the center to the two end faces of the specimen, i.e., on a portion having a total length of 100 mm, by a total of three cycles under the same dry-wet-cycle conditions as described above. After that, a pulsating torsional fatigue test was conducted by fixing one end portion. The torsional fatigue was evaluated by a maximum stress when the cycle was repeated 100,000 times.

In the bending fatigue test, ingots containing respective components were melt-formed and rolled into plate materials having a thickness of 5 mm. A specimen having a width of 25 mm, a length of 220 mm, and a thickness of 5 mm (the rolled surface was left intact) was formed from each rolled material. After that, hardening (holding time = 30 min) and tempering were performed under the temperature conditions shown in Table 2 by using an electric furnace, and a central 100-mm long portion was tested under the same dry-wet-cycle conditions as those for the torsional fatigue specimen. Then, a four-point bending fatigue test having a lower span of 150 mm and an upper span of 50 mm was conducted. The evaluation was performed by a maximum stress when 100,000 cycles were achieved.

(Evaluation results)

(1) In Table 1 - 2, steel Nos. 22 to 50 were steel materials (Examples 1 to 50) having chemical components, pre-heat-treatment structures, and prior austenite grain sizes falling within the ranges of the present invention. Although the tensile strength was on a high strength level of 1,300 MPa or more, the corrosion weight loss was less than 1,000 (g/m$^2$), i.e., the corrosion resistance was high, and the impact value at an impact testing temperature of -40°C was 100 (J/cm$^2$) or more, i.e., the low-temperature toughness was high, as shown in Table 2 - 2. Also, the fatigue strength was higher than that of No. 21 (JIS SUP9) as the conventional material in each of the torsional fatigue test and bending fatigue test.

By contrast, in Table 1 below, steel Nos. 1 to 21 were steel materials (Comparative Examples 1 to 21) having chemical components falling outside the ranges of the present invention, and particularly steel No. 21 was made of JIS SUP9.

Table 1

| Classification | Steel No. | C | Si | Mn | P | S | Cu | Ni | Cr | sAl | Ti | Nb | Ti+Nb | TN |
|---|---|---|---|---|---|---|---|---|---|---|---|---|---|---|
| Comparative Example 1 | 1 | 0.14* | 0.87 | 1.88 | 0.033 | 0.022 | 0.53 | 0.15 | 0.35 | 0.010 | 0.015 | 0.019 | 0.034 | 46 |
| Comparative Example 2 | 2 | 0.37* | 1.11 | 2.12 | 0.025 | 0.014 | 0.46 | 0.18 | 0.46 | 0.035 | 0.024 | 0.018 | 0.042 | 88 |
| Comparative Example 3 | 3 | 0.21 | 0.58* | 1.83 | 0.018 | 0.016 | 0.28 | 0.07 | 0.35 | 0.005 | 0.043 | 0.025 | 0.068 | 66 |
| Comparative Example 4 | 4 | 0.22 | 1.56* | 2.05 | 0.014 | 0.022 | 0.004 | 0.34 | 0.43 | 0.068 | 0.037 | 0.022 | 0.059 | 76 |
| Comparative Example 5 | 5 | 0.21 | 0.83 | 0.91* | 0.012 | 0.024 | 0.87 | 0.15 | 0.86 | 0.010 | 0.015 | 0.054 | 0.069 | 45 |
| Comparative Example 6 | 6 | 0.25 | 1.28 | 3.15* | 0.010 | 0.022 | 0.23 | 0.03 | 0.35 | 0.012 | 0.034 | 0.030 | 0.064 | 55 |
| Comparative Example 7 | 7 | 0.26 | 1.48 | 2.00 | 0.038* | 0.019 | 0.27 | 0.07 | 0.42 | 0.041 | 0.056 | 0.010 | 0.066 | 60 |
| Comparative Example 8 | 8 | 0.21 | 0.78 | 1.65 | 0.033 | 0.038* | 0.22 | 0.11 | 0.65 | 0.031 | 0.025 | 0.015 | 0.040 | 50 |
| Comparative Example 9 | 9 | 0.23 | 0.95 | 1.75 | 0.025 | 0.031 | 0.004* | 0.08 | 0.63 | 0.033 | 0.022 | 0.025 | 0.047 | 40 |
| Comparative Example 10 | 10 | 0.24 | 0.88 | 1.74 | 0.028 | 0.028 | 0.24 | 0.004* | 0.48 | 0.034 | 0.024 | 0.035 | 0.059 | 55 |
| Comparative Example 11 | 11 | 0.22 | 0.74 | 1.88 | 0.024 | 0.028 | 0.21 | 0.11 | 0.34* | 0.041 | 0.022 | 0.025 | 0.047 | 65 |
| Comparative Example 12 | 12 | 0.24 | 0.89 | 1.45 | 0.008 | 0.027 | 0.33 | 0.11 | 0.83* | 0.076 | 0.024 | 0.030 | 0.055 | 32 |
| Comparative Example 13 | 13 | 0.28 | 1.10 | 1.83 | 0.005 | 0.005 | 0.38 | 0.14 | 0.46 | 0.002* | 0.051 | 0.015 | 0.066 | 93 |
| Comparative Example 14 | 14 | 0.22 | 1.46 | 1.95 | 0.012 | 0.009 | 0.54 | 0.19 | 0.60 | 0.120* | 0.012 | 0.055 | 0.067 | 118 |
| Comparative Example 15 | 15 | 0.24 | 0.62 | 1.68 | 0.018 | 0.010 | 0.49 | 0.12 | 0.38 | 0.069 | 0.003* | 0.061 | 0.064 | 88 |
| Comparative Example 16 | 16 | 0.25 | 0.78 | 1.87 | 0.021 | 0.015 | 0.31 | 0.11 | 0.45 | 0.035 | 0.072* | 0.010 | 0.082 | 45 |
| Comparative Example 17 | 17 | 0.22 | 0.77 | 1.55 | 0.024 | 0.016 | 0.25 | 0.22 | 0.36 | 0.013 | 0.014 | 0.004* | 0.018 | 78 |
| Comparative Example 18 | 18 | 0.31 | 0.88 | 2.11 | 0.025 | 0.033 | 0.15 | 0.25 | 0.55 | 0.033 | 0.012 | 0.061* | 0.073 | 55 |
| Comparative Example 19 | 19 | 0.27 | 1.01 | 2.89 | 0.033 | 0.018 | 0.11 | 0.20 | 0.43 | 0.065 | 0.055 | 0.028 | 0.083* | 108 |
| Comparative Example 20 | 20 | 0.22 | 1.12 | 1.99 | 0.032 | 0.034 | 0.21 | 0.01 | 0.66 | 0.026 | 0.027 | 0.013 | 0.040 | 158* |
| Comparative Example 21 (JIS SUP9) | 21 | 0.57* | 0.18* | 0.83* | 0.013 | 0.010 | 0.13 | 0.02 | 0.82* | 0.025 | - | - | - | 55 |
| * Indicates that the component fell outside the range of the present invention. | | | | | | | | | | | | | | |

Table 2

| Classification | Steel No. | C | Si | Mn | P | S | Cu | Ni | Cr | sAl | Ti | Nb | Ti+Nb | TN |
|---|---|---|---|---|---|---|---|---|---|---|---|---|---|---|
| Example 1 | 22 | 0.15 | 0.74 | 1.99 | 0.011 | 0.008 | 0.10 | 0.36 | 0.47 | 0.020 | 0.005 | 0.059 | 0.064 | 45 |
| Example 2 | 23 | 0.35 | 0.84 | 1.24 | 0.020 | 0.015 | 0.01 | 0.07 | 0.71 | 0.021 | 0.035 | 0.035 | 0.070 | 143 |
| Example 3 | 24 | 0.23 | 0.61 | 1.75 | 0.009 | 0.004 | 0.02 | 0.04 | 0.68 | 0.030 | 0.059 | 0.030 | 0.060 | 50 |
| Example 4 | 25 | 0.27 | 1.48 | 1.98 | 0.013 | 0.024 | 0.12 | 0.01 | 0.35 | 0.014 | 0.021 | 0.008 | 0.029 | 68 |
| Example 5 | 26 | 0.33 | 1.00 | 1.01 | 0.009 | 0.033 | 0.19 | 0.45 | 0.65 | 0.019 | 0.006 | 0.055 | 0.069 | 43 |
| Example 6 | 27 | 0.22 | 1.13 | 2.99 | 0.019 | 0.007 | 0.26 | 0.48 | 0.38 | 0.033 | 0.030 | 0.005 | 0.035 | 78 |
| Example 7 | 28 | 0.21 | 0.69 | 2.84 | 0.034 | 0.026 | 0.31 | 0.22 | 0.65 | 0.044 | 0.022 | 0.027 | 0.049 | 83 |
| Example 8 | 29 | 0.31 | 0.95 | 2.67 | 0.027 | 0.034 | 0.65 | 0.07 | 0.37 | 0.076 | 0.011 | 0.012 | 0.023 | 80 |
| Example 9 | 30 | 0.33 | 1.18 | 2.98 | 0.013 | 0.009 | 0.01 | 0.15 | 0.34 | 0.010 | 0.059 | 0.005 | 0.064 | 59 |
| Example 10 | 31 | 0.29 | 1.41 | 2.20 | 0.025 | 0.011 | 1.00 | 0.94 | 0.33 | 0.007 | 0.048 | 0.019 | 0.067 | 39 |
| Example 11 | 32 | 0.34 | 1.32 | 1.97 | 0.016 | 0.034 | 0.93 | 0.01 | 0.55 | 0.026 | 0.025 | 0.033 | 0.058 | 41 |
| Example 12 | 33 | 0.26 | 1.33 | 1.63 | 0.012 | 0.021 | 0.55 | 1.00 | 0.31 | 0.063 | 0.007 | 0.051 | 0.058 | 145 |
| Example 13 | 34 | 0.27 | 1.48 | 1.84 | 0.009 | 0.007 | 0.94 | 0.65 | 0.30 | 0.071 | 0.009 | 0.037 | 0.046 | 72 |
| Example 14 | 35 | 0.23 | 1.24 | 1.98 | 0.008 | 0.018 | 0.40 | 0.24 | 0.80 | 0.006 | 0.048 | 0.013 | 0.061 | 68 |
| Example 15 | 36 | 0.25 | 0.94 | 1.91 | 0.015 | 0.025 | 0.21 | 0.15 | 0.63 | 0.005 | 0.025 | 0.021 | 0.046 | 54 |
| Example 16 | 37 | 0.23 | 0.81 | 1.87 | 0.025 | 0.018 | 0.34 | 0.18 | 0.38 | 0.080 | 0.028 | 0.015 | 0.043 | 65 |
| Example 17 | 38 | 0.22 | 0.78 | 1.90 | 0.031 | 0.005 | 0.38 | 0.05 | 0.61 | 0.035 | 0.005 | 0.019 | 0.024 | 58 |
| Example 18 | 39 | 0.21 | 1.15 | 2.10 | 0.005 | 0.006 | 0.24 | 0.03 | 0.67 | 0.038 | 0.060 | 0.009 | 0.069 | 45 |
| Example 19 | 40 | 0.27 | 1.09 | 2.01 | 0.006 | 0.008 | 0.21 | 0.09 | 0.31 | 0.028 | 0.041 | 0.005 | 0.046 | 65 |
| Example 20 | 41 | 0.29 | 1.01 | 2.05 | 0.025 | 0.015 | 0.45 | 0.11 | 0.33 | 0.048 | 0.009 | 0.060 | 0.069 | 120 |
| Example 21 | 42 | 0.31 | 0.94 | 2.07 | 0.028 | 0.025 | 0.61 | 0.15 | 0.46 | 0.052 | 0.046 | 0.006 | 0.070 | 110 |
| Example 22 | 43 | 0.33 | 0.97 | 1.78 | 0.018 | 0.028 | 0.51 | 0.24 | 0.54 | 0.076 | 0.044 | 0.021 | 0.065 | 150 |
| Example 23 | 44 | 0.26 | 1.11 | 1.78 | 0.023 | 0.009 | 0.31 | 0.02 | 0.55 | 0.044 | 0.037 | 0.007 | 0.044 | 102 |
| Example 24 | 45 | 0.18 | 0.9 | 1.99 | 0.013 | 0.009 | 0.13 | 0.05 | 0.65 | 0.040 | 0.033 | 0.032 | 0.065 | 42 |
| Example 25 | 46 | 0.27 | 0.88 | 1.99 | 0.013 | 0.009 | 0.13 | 0.05 | 0.64 | 0.040 | 0.033 | 0.032 | 0.065 | 50 |

(continued)

| Classification | Steel No. | C | Si | Mn | P | S | Cu | Ni | Cr | sAl | Ti | Nb | Ti+Nb | TN |
|---|---|---|---|---|---|---|---|---|---|---|---|---|---|---|
| Example 26 | 47 | 0.21 | 0.93 | 1.87 | 0.015 | 0.033 | 0.10 | 0.15 | 0.66 | 0.073 | 0.025 | 0.021 | 0.046 | 60 |
| Example 27 | 48 | 0.28 | 0.89 | 1.90 | 0.021 | 0.023 | 0.15 | 0.10 | 0.55 | 0.040 | 0.029 | 0.011 | 0.040 | 65 |
| Example 28 | 49 | 0.23 | 0.94 | 2.10 | 0.022 | 0.025 | 0.18 | 0.08 | 0.65 | 0.074 | 0.035 | 0.015 | 0.050 | 45 |
| Example 29 | 50 | 0.24 | 0.88 | 2.05 | 0.026 | 0.028 | 0.16 | 0.19 | 0.60 | 0.031 | 0.031 | 0.021 | 0.052 | 84 |
| * Indicates that the component fell outside the range of the present invention. | | | | | | | | | | | | | | |

In Comparative Example 1, the tensile strength was 1,005 MPa even when the 180°C tempering process was performed because the C content was too low. Since no desired strength was obtained, the fatigue strength decreased.

In Comparative Example 2, a carbide excessively deposited because the C content was 0.37%, i.e., too high. Consequently, both the corrosion resistance and low-temperature toughness deteriorated.

In Comparative Example 3, the tensile strength was 1,154 MPa even when the 180°C tempering process was performed because the Si content was 0.58%, i.e., too low. Since no desired strength was obtained, the fatigue strength decreased.

In Comparative Example 4, the low-temperature toughness deteriorated because the Si content was too high.

In Comparative Example 5, the tensile strength was 1,205 MPa even when the 180°C tempering process was performed because the Mn content was too low. Since no desired strength was obtained, the fatigue strength decreased.

In Comparative Example 6, the Mn content was too high, so a desired strength was obtained, but the corrosion resistance and toughness deteriorated, and the fatigue strength decreased in the fatigue test because corrosion progressed.

In Comparative Example 7, the toughness deteriorated because the P addition amount was too large, so the fatigue strength decreased.

In Comparative Example 8, the toughness deteriorated because the S addition amount was too large, so the fatigue strength decreased.

In Comparative Example 9, the corrosion resistance deteriorated because the Cu addition amount was too small. Accordingly, the corrosion of the fatigue specimen progressed, and the fatigue strength decreased.

In Comparative Example 10, the corrosion resistance deteriorated because the Ni addition amount was too small. Accordingly, the corrosion of the fatigue specimen progressed, and the fatigue strength decreased.

In comparative Example 11, the tensile strength was 1,258 MPa even when the 180°C tempering process was performed because the Cr content was too low. Since no desired strength was obtained, the fatigue strength decreased.

In comparative Example 12, a carbide became surplus because the Cr content was too high. Consequently, both the toughness and corrosion resistance deteriorated, and the fatigue strength decreased.

In Comparative Example 13, the Al content was too low, so deoxidization was insufficient, and an oxide became surplus. Consequently, both the toughness and corrosion resistance decreased, and the fatigue strength decreased due to stress concentration caused by the progress of corrosion and the oxide.

In Comparative Example 14, the Al content was too high, so an Al2O3-based oxide and a nitride such as AlN became surplus. Consequently, both the toughness and corrosion resistance decreased, and the fatigue strength also decreased.

In Comparative Example 15, the Ti content was too low. Even when 180°C tempering was performed, therefore, the tensile strength was 1,212 MPa, i.e., no desired strength was obtained. Also, the toughness decreased because the structure became coarse, so the fatigue strength decreased.

In Comparative Example 16, the Ti addition amount was too large. Accordingly, a carbonitride excessively deposited, and this decreased the toughness and deteriorated the corrosion resistance. Consequently, the fatigue strength also decreased.

In Comparative Example 17, no desired strength was obtained because the Nb content was too low. In addition, the toughness decreased because the crystal grains were not refined.

In Comparative Example 18, a large amount of carbide was deposited because the Nb addition amount was too large. Since the corrosion resistance decreased, therefore, the corrosion of the fatigue specimen progressed, and the fatigue strength decreased.

In Comparative Example 19, the addition amount of each of Ti and Nb fell within the range of the present invention, but the total amount of the two elements was too large, so a carbonitride excessively deposited. Consequently, both the toughness and corrosion resistance deteriorated, and the fatigue strength also decreased.

In Comparative Example 20, a nitride became surplus because N was too high, so both the toughness and corrosion resistance deteriorated, and the fatigue strength decreased.

Comparative Example 21 was an example of JIS SUP9 used as a stabilizer. Since the chemical components fell outside the ranges of the present invention, the toughness and corrosion resistance deteriorated.

Table 3

| Classification | Steel No. | Pre-structure | AC3 | Quenching °C | Tempering °C |
|---|---|---|---|---|---|
| Comparative Example 1 | 1 | B | 830 | 880 | 180 |
| Comparative Example 2 | 2 | M | 821 | 880 | 480 |
| Comparative Example 3 | 3 | B | 817 | 870 | 180 |
| Comparative Example 4 | 4 | B | 834 | 890 | 350 |
| Comparative Example 5 | 5 | B+M | 853 | 910 | 180 |
| Comparative Example 6 | 6 | B | 789 | 840 | 300 |
| Comparative Example 7 | 7 | B | 846 | 900 | 320 |
| Comparative Example 8 | 8 | B | 835 | 890 | 180 |
| Comparative Example 9 | 9 | B+M | 833 | 890 | 300 |
| Comparative Example 10 | 10 | M | 833 | 890 | 180 |

(Continued)

Table 3

| Classification | Steel No. | TS (MPa) | EL (%) | RA (%) | uE-40 (J/cm2) | Low-temperature toughness | Gh | Corrosion weight loss (g/m2) | Corrosion resistance | Torsional fatigue MPa | Bending fatigue MPa |
|---|---|---|---|---|---|---|---|---|---|---|---|
| Comparative Example 1 | 1 | 1005* | 25.6 | 75.1 | 109 | ○ | 10.5 | 561 | ○ | 550 | 260 |
| Comparative Example 2 | 2 | 1551 | 9.2 | 36.9 | 18* | × | 10.5 | 1060* | × | 580 | 240 |
| Comparative Example 3 | 3 | 1154* | 22.1 | 68.9 | 111 | ○ | 10.5 | 541 | ○ | 560 | 240 |
| Comparative Example 4 | 4 | 1530 | 9.5 | 33.3 | 15* | × | 10.5 | 531 | ○ | 550 | 230 |
| Comparative Example 5 | 5 | 1205* | 9.8 | 29.7 | 106 | ○ | 10.5 | 489 | ○ | 540 | 220 |
| Comparative Example 6 | 6 | 1508 | 10.0 | 36.4 | 42* | × | 10.5 | 1241* | × | 540 | 240 |
| Comparative Example 7 | 7 | 1501 | 8.8 | 24.0 | 14* | × | 10.5 | 513 | ○ | 560 | 240 |
| Comparative Example 8 | 8 | 1469 | 8.8 | 24.0 | 14* | × | 10.0 | 524 | ○ | 560 | 260 |
| Comparative Example 9 | 9 | 1510 | 23.4 | 65.4 | 108 | ○ | 10.0 | 1241* | × | 540 | 240 |
| Comparative Example 10 | 10 | 1395 | 22.5 | 67.2 | 102 | ○ | 10.0 | 1241* | × | 540 | 240 |

(Continued)

EP 2 708 612 A1

Table 3

| Classification | Steel No. | Pre-structure | AC3 | Quenching °C | Tempering °C |
|---|---|---|---|---|---|
| Comparative Example 11 | 11 | B | 822 | 880 | 180 |
| Comparative Example 12 | 12 | B+M | 834 | 890 | 340 |
| Comparative Example 13 | 13 | B | 825 | 880 | 300 |
| Comparative Example 14 | 14 | B+M | 835 | 890 | 440 |
| Comparative Example 15 | 15 | B+M | 822 | 880 | 430 |
| Comparative Example 16 | 16 | B+M | 821 | 880 | 180 |
| Comparative Example 17 | 17 | B | 833 | 890 | 180 |
| Comparative Example 18 | 18 | M | 815 | 870 | 440 |
| Comparative Example 19 | 19 | B+M | 797 | 850 | 420 |
| Comparative Example 20 | 20 | B+M | 834 | 890 | 350 |
| Comparative Example 21 (JIS SUP9) | 21 | M | 829 | 880 | 250 |

(Continued)

EP 2 708 612 A1

Table 3

| Classification | Steel No. | TS (MPa) | EL (%) | RA (%) | uE-40 (J/cm2) | Low-temperature toughness | Gh | Corrosion weight loss (g/m2) | Corrosion resistance | Torsional fatigue MPa | Bending fatigue MPa |
|---|---|---|---|---|---|---|---|---|---|---|---|
| Comparative Example 11 | 11 | 1258* | 23.1 | 63.1 | 118 | ○ | 10.0 | 556 | ○ | 550 | 220 |
| Comparative Example 12 | 12 | 1522 | 8.4 | 32.8 | 11* | × | 10.5 | 1256* | × | 560 | 230 |
| Comparative Example 13 | 13 | 1516 | 9.2 | 30.5 | 37* | ○ | 10.5 | 1111* | ○ | 530 | 260 |
| Comparative Example 14 | 14 | 1521 | 9.6 | 36.5 | 14* | × | 10.0 | 1300* | × | 540 | 250 |
| Comparative Example 15 | 15 | 1212* | 9.3 | 35.2 | 12* | × | 7.0* | 468 | ○ | 550 | 260 |
| Comparative Example 16 | 16 | 1461 | 9.3 | 33.2 | 11* | × | 10.0 | 1300* | × | 540 | 260 |
| Comparative Example 17 | 17 | 1195* | 8.9 | 29.3 | 10* | × | 7.0* | 510 | ○ | 560 | 240 |
| Comparative Example 18 | 18 | 1511 | 8.9 | 29.8 | 15 | × | 7.5 | 1300* | × | 550 | 260 |
| Comparative Example 19 | 19 | 1554 | 9.3 | 31.0 | 12* | × | 10.0 | 1410* | × | 570 | 250 |
| Comparative Example 20 | 20 | 1498 | 10.5 | 20.0 | 10* | × | 10.0 | 1317* | × | 540 | 250 |
| Comparative Example 21 (JIS SUP9) | 21 | 1410 | 9.7 | 32.7 | 25* | × | 10.5 | 1462* | × | 700 | 320 |

* Indicates that the characteristic fell outside the range of the present invention.

Table 4

| Classification | Steel No. | Pre-structure | AC3 | Quenching °C | Tempering °C |
|---|---|---|---|---|---|
| Example 1 | 22 | B | 810 | 860 | None |
| Example 2 | 23 | B | 843 | 900 | 180 |
| Example 3 | 24 | B | 816 | 870 | 180 |
| Example 4 | 25 | B | 836 | 890 | 320 |
| Example 5 | 26 | B+M | 847 | 900 | 180 |
| Example 6 | 27 | B+M | 789 | 840 | 450 |
| Example 7 | 28 | B | 791 | 850 | 440 |
| Example 8 | 29 | B | 801 | 860 | 410 |
| Example 9 | 30 | B | 790 | 840 | 460 |
| Example 10 | 31 | B+M | 821 | 880 | 450 |
| Example 11 | 32 | B+M | 831 | 890 | 420 |
| Example 12 | 33 | B+M | 833 | 890 | 380 |
| Example 13 | 34 | B+M | 832 | 890 | 260 |
| Example 14 | 35 | M | 825 | 880 | 460 |
| Example 15 | 36 | M | 822 | 880 | 250 |

(Continued)

EP 2 708 612 A1

Table 4

| Classification | Steel No. | TS (MPa) | EL (%) | RA (%) | uE-40 (J/cm2) | Low-temperature toughness | Gh | Corrosion weight loss (g/m2) | Corrosion resistance | Torsional fatigue MPa | Bending fatigue MPa |
|---|---|---|---|---|---|---|---|---|---|---|---|
| Example 1 | 22 | 1563 | 16.0 | 65.8 | 109 | ○ | 10.5 | 472 | ○ | 710 | 340 |
| Example 2 | 23 | 1548 | 15.9 | 64.6 | 103 | ○ | 10.5 | 461 | ○ | 710 | 350 |
| Example 3 | 24 | 1501 | 15.9 | 64.3 | 108 | ○ | 8.0 | 432 | ○ | 720 | 330 |
| Example 4 | 25 | 1521 | 21.6 | 70.1 | 119 | ○ | 10.0 | 478 | ○ | 720 | 330 |
| Example 5 | 26 | 1537 | 15.3 | 62.7 | 109 | ○ | 10.5 | 426 | ○ | 710 | 340 |
| Example 6 | 27 | 1558 | 15.6 | 64.2 | 114 | ○ | 9.0 | 460 | ○ | 710 | 350 |
| Example 7 | 28 | 1561 | 19.8 | 68.7 | 117 | ○ | 10.0 | 497 | ○ | 710 | 340 |
| Example 8 | 29 | 1541 | 17.8 | 64.9 | 109 | ○ | 10.0 | 425 | ○ | 730 | 340 |
| Example 9 | 30 | 1544 | 15.7 | 65.2 | 113 | ○ | 10.5 | 449 | ○ | 720 | 330 |
| Example 10 | 31 | 1555 | 16.8 | 67.2 | 105 | ○ | 7.5 | 498 | ○ | 720 | 330 |
| Example 11 | 32 | 1565 | 18.8 | 60.3 | 102 | ○ | 7.5 | 427 | ○ | 710 | 340 |
| Example 12 | 33 | 1532 | 18.3 | 66.1 | 108 | ○ | 10.5 | 485 | ○ | 720 | 340 |
| Example 13 | 34 | 1545 | 16.9 | 61.8 | 118 | ○ | 10.5 | 461 | ○ | 720 | 330 |
| Example 14 | 35 | 1564 | 16.1 | 67.4 | 109 | ○ | 9.0 | 434 | ○ | 710 | 340 |
| Example 15 | 36 | 1512 | 19.2 | 65.1 | 109 | ○ | 10.0 | 454 | ○ | 720 | 350 |

(Continued)

Table 4

| Classification | Steel No. | Pre-structure | AC3 | Quenching °C | Tempering °C |
|---|---|---|---|---|---|
| Example 16 | 37 | M | 824 | 880 | None |
| Example 17 | 38 | M | 826 | 880 | 180 |
| Example 18 | 39 | M | 820 | 870 | 270 |
| Example 19 | 40 | M | 819 | 870 | 180 |
| Example 20 | 41 | M | 823 | 880 | 180 |
| Example 21 | 42 | M | 821 | 880 | 280 |
| Example 22 | 43 | M | 826 | 880 | 280 |
| Example 23 | 44 | M | 836 | 900 | 270 |
| Example 24 | 45 | M | 819 | 900 | 270 |
| Example 25 | 46 | M | 817 | 900 | 290 |
| Example 26 | 47 | M | 824 | 900 | 270 |
| Example 27 | 48 | M | 823 | 900 | 270 |
| Example 28 | 49 | M | 820 | 900 | 280 |
| Example 29 | 50 | M | 820 | 900 | 280 |

(Continued)

EP 2 708 612 A1

(2) Table 5 below shows examples of the influence of the grain size.

Table 4

| Classification | Steel No. | TS (MPa) | EL (%) | RA (%) | uE-40 (J/cm2) | Low-temperature toughness | Gh | Corrosion weight loss (g/m2) | Corrosion resistance | Torsional fatigue MPa | Bending fatigue MPa |
|---|---|---|---|---|---|---|---|---|---|---|---|
| Example 16 | 37 | 1483 | 22.4 | 70.3 | 121 | ○ | 10.0 | 464 | ○ | 730 | 350 |
| Example 17 | 38 | 1558 | 16.5 | 66.4 | 104 | ○ | 10.5 | 455 | ○ | 730 | 360 |
| Example 18 | 39 | 1564 | 17.1 | 63.8 | 106 | ○ | 10.0 | 412 | ○ | 720 | 350 |
| Example 19 | 40 | 1518 | 23.1 | 71.1 | 120 | ○ | 10.5 | 425 | ○ | 720 | 340 |
| Example 20 | 41 | 1577 | 18.6 | 68.2 | 119 | ○ | 10.0 | 444 | ○ | 710 | 330 |
| Example 21 | 42 | 1564 | 18.3 | 68.4 | 118 | ○ | 10.5 | 462 | ○ | 720 | 350 |
| Example 22 | 43 | 1566 | 19.2 | 69.5 | 117 | ○ | 10.5 | 435 | ○ | 720 | 350 |
| Example 23 | 44 | 1544 | 17.5 | 63.5 | 101 | ○ | 10.5 | 429 | ○ | 720 | 360 |
| Example 24 | 45 | 1558 | 16.8 | 63.1 | 104 | ○ | 10.5 | 410 | ○ | 710 | 350 |
| Example 25 | 46 | 1564 | 17.4 | 64.8 | 108 | ○ | 10.5 | 419 | ○ | 710 | 350 |
| Example 26 | 47 | 1565 | 17.9 | 65.1 | 108 | ○ | 9.5 | 417 | ○ | 710 | 330 |
| Example 27 | 48 | 1554 | 18.1 | 66.9 | 108 | ○ | 9.5 | 423 | ○ | 720 | 340 |
| Example 28 | 49 | 1521 | 21.3 | 71.6 | 124 | ○ | 9.0 | 432 | ○ | 740 | 340 |
| Example 29 | 50 | 1524 | 22.0 | 71.4 | 126 | ○ | 9.0 | 411 | ○ | 720 | 330 |

* Indicates that the characteristic fell outside the range of the present invention.

After specimens having different grain sizes were formed by adjusting the hardening temperature after forming by using steel No. 48, the tensile strength was adjusted by tempering.

In each of Examples 27-1, 27-2, and 27-3, the grain size fell within the range of the present invention, so both the strength and toughness were high, and a high fatigue characteristic was obtained.

On the other hand, in Comparative Example 22, the grain size was larger than the range of the present invention. Accordingly, the hardenability decreased because the crystal grains were too fine, and the fatigue strength decreased because the tensile strength was too low.

In Comparative Example 23, the grain size was smaller than the range of the present invention. Since the crystal grains were coarse, the toughness deteriorated too much, and the fatigue characteristic decreased.

In Comparative Example 24, the crystal grains were mixed grains, so the toughness deteriorated, and the fatigue strength decreased.

Table 5

| Classification | Steel No. | Quenching °C | Tempering °C | Gh | TS (MPa) | EL (%) | RA (%) | uE-40 (J/cm2) | Low-temperature toughness | Torsional fatigue MPa | Bending fatigue MPa |
|---|---|---|---|---|---|---|---|---|---|---|---|
| Example 27-1 | 48 | 900 | 270 | 9.5 | 1554 | 18.1 | 66.9 | 108 | ○ | 720 | 340 |
| Example 27-2 | 48 | 950 | 290 | 9.0 | 1568 | 17.3 | 64.5 | 105 | ○ | 750 | 340 |
| Example 27-3 | 48 | 970 | 360 | 7.5 | 1571 | 17.3 | 63.8 | 103 | ○ | 730 | 330 |
| Comparative Example 22 | 48 | 850 | 250 | 11.0 | 1279 | 20.3 | 71.1 | 121 | ○ | 530 | 240 |
| Comparative Example 23 | 48 | 1020 | 400 | 7.0 | 1554 | 12.3 | 30.1 | 68 | × | 520 | 220 |
| Comparative Example 24 | 48 | 1050 | 420 | Mixed grains (7.5+10.0) | 1551 | 7.3 | 24.1 | 25 | × | 490 | 210 |

(3) Table 6 below shows the heating rate at hardening and the influence of the pre-hardening structure.

Specimens were formed by changing the heating rate at hardening and the pre-hardening structure by using steel No. 48. Examples 27-4, 27-5, 27-6, and 27-7 all fell within the ranges of the present invention. In Example 27-4, the pre-structure was ferrite-perlite (F + P), and the heating rate was set at 5°C/sec of furnace heating, which was lower than 30°C/sec. In Examples 27-5, 27-6, and 27-7, the heating rate was set at 30°C/sec or more by using electrical heating as a heating method, and the pre-structure was bainite (B), martensite (M), or bainite-martensite (B + M). Each example had a desired strength and desired toughness, so a high fatigue strength was obtained.

By contrast, in Comparative Example 25, the heating rate was set at 30°C/sec or more, and the pre-structure was ferrite-perlite. In Comparative Example 26, the heating rate was set at 100°C/sec, and the pre-structure was ferrite-bainite (F + B). In each comparative example, the tensile strength decreased because the dissolution of a carbide was insufficient during quenching, and the toughness decreased because the crystal grains were mixed grains, so the fatigue strength decreased.

Table 6

| Classification | Steel No. | Heating method | Heating rate (°C/sec) | Pre-structure | Quenching °C | Tempering °C | Gh |
|---|---|---|---|---|---|---|---|
| Example 27-4 | 48 | Furnace heating | 5 | F+P | 900 | 270 | 9.5 |
| Example 27-5 | 48 | Electrical heating | 30 | B+M | 900 | 270 | 10.5 |
| Example 27-6 | 48 | Electrical heating | 50 | B | 900 | 270 | 10.5 |
| Example 27-7 | 48 | Electrical heating | 100 | M | 900 | 270 | 10.5 |
| Comparative Example 25 | 48 | Electrical heating | 30 | F+B | 900 | 270 | Mixed grains (6.5+10.5) |
| Comparative Example 26 | 48 | Electrical heating | 100 | F+B | 900 | 270 | Mixed grains (7.0+11.5) |

(Continued)

Table 6

| Classification | Steel No. | TS (MPa) | EL (%) | RA (%) | uE-40 (J/cm2) | Low-temperature toughness | Torsional fatigue MPa | Bending fatigue MPa |
|---|---|---|---|---|---|---|---|---|
| Example 27-4 | 48 | 1554 | 18.1 | 66.9 | 108 | ○ | 720 | 340 |
| Example 27-5 | 48 | 1568 | 20.7 | 70.8 | 125 | ○ | 730 | 350 |
| Example 27-6 | 48 | 1561 | 20.1 | 70.3 | 121 | ○ | 720 | 350 |
| Example 27-7 | 48 | 1578 | 20.2 | 70.1 | 124 | ○ | 740 | 360 |
| Comparative Example 25 | 48 | 1273 | 10.9 | 40.5 | 67 | × | 530 | 210 |
| Comparative Example 26 | 48 | 1280 | 10.7 | 40.8 | 74 | × | 530 | 220 |

**Claims**

1. Steel, excellent in corrosion resistance and low-temperature toughness, for a vehicle suspension spring part, **char-**

**acterized in that** it comprises 0.15 to 0.35% by mass of C, more than 0.6% by mass but 1.5% by mass or less of Si, 1 to 3% by mass of Mn, 0.3 to 0.8% by mass of Cr, 0.005 to 0.080% by mass of sol. Al, 0.005 to 0.060% by mass of Ti, 0.005 to 0.060% by mass of Nb, not more than 150 ppm of N, not more than 0.035% by mass of P, not more than 0.035% by mass of S, 0.01 to 1.00% by mass of Cu, and 0.01 to 1.00% by mass of Ni, the balance consisting of Fe and unavoidable impurities, with Ti + Nib ≤ 0.07% by mass, and has a tensile strength of not less than 1,300 MPa.

2. The steel according to claim 1, **characterized in that** its crystal grains fall within a range of 7.5 to 10.5 as a prior austenite grain size number, after hardening, and has a tensile strength of not less than 1,300 MPa.

3. The steel according to claim 1, **characterized in that** it further contains not more than 1% of Mo, not more than 1% of V, not more than 0.010% of B, not more than 0.010% of Ca, and not more than 0.5% of Pb.

4. A method of fabricating a vehicle suspension spring part **characterized by** comprising:

   hot-forming or cold-forming steel into a shape of a spring part, the steel comprising 0.15 to 0.35% by mass of C, more than 0.6% by mass but 1.5% by mass or less of Si, 1 to 3% by mass of Mn, 0.3 to 0.8% by mass of Cr, 0.005 to 0.080% by mass of sol. Al, 0.005 to 0.060% by mass of Ti, 0.005 to 0.060% by mass of Nb, not more than 150 ppm of N, not more than 0.035% by mass of P, not more than 0.035% by mass of S, 0.01 to 1.00% by mass of Cu, and 0.01 to 1.00% by mass of Ni, the balance consisting of Fe and unavoidable impurities, with Ti + Nb ≤ 0.07% by mass; and
   hardening the formed product with reheating of the formed product by furnace heating, high-frequency induction heating or electrical heating to cause, after the hardening, its crystal grains to fall within a range of 7.5 to 10.5 as a prior austenite grain size number, thereby providing a spring part having a tensile strength of not less than 1,300 MPa, and excellent high corrosion resistance and a low-temperature toughness.

5. The method according to claim 4, **characterized in that** steel having bainite, martensite or a mixed structure of bainite/martensite as a pre-hardening structure is formed into a shape of a desired spring part, then heated at a heating rate of not less than 30°C/sec by high-frequency induction heating or direct electrical resistance heating, and then quenched immediately.

6. The method according to claim 4, **characterized in that** the heating temperature is austenization temperature + 50°C or more, but less than 1,050°C.

7. The method according to claim 4, **characterized in that** a tempering process is performed after the hardening.

8. A vehicle suspension spring part **characterized in that** it is manufactured by hot-forming or cold-forming steel into a shape of a spring part, the steel comprising 0.15 to 0.35% by mass of C, more than 0.6% by mass but 1.5% by mass or less of Si, 1 to 3% by mass of Mn, 0.3 to 0.8% by mass of Cr, 0.005 to 0.080% by mass of sol. Al, 0.005 to 0.060% by mass of Ti, 0.005 to 0.060% by mass of Nb, not more than 150 ppm of N, not more than 0.035% by mass of P, not more than 0.035% by mass of S, 0.01 to 1.00% by mass of Cu, and 0.01 to 1.00% by mass of Ni, the balance consisting of Fe and unavoidable impurities, with Ti + Nb ≤ 0.07% by mass, and hardening the formed product with reheating of the formed product by furnace heating, high-frequency induction heating or electrical heating to cause, after the hardening, its crystal grains to fall within a range of 7.5 to 10.5 as a prior austenite grain size number, and has a tensile strength of not less than 1,300 MPa, and excellent high corrosion resistance and a low-temperature toughness.

9. The spring part according to claim 8, **characterized in that** steel having bainite, martensite or a mixed structure of bainite/martensite as a pre-hardening structure is formed into a shape of a desired spring part, then heated at a heating rate of not less than 30°C/sec by high-frequency induction heating or direct electrical resistance heating, and then quenched immediately.

FIG. 1

FIG. 2

| INTERNATIONAL SEARCH REPORT | International application No. |
|---|---|
| | PCT/JP2012/062106 |

**A. CLASSIFICATION OF SUBJECT MATTER**
*C22C38/00*(2006.01)i, *B60G21/055*(2006.01)i, *C21D9/02*(2006.01)i, *C22C38/58*
(2006.01)i, *C22C38/60*(2006.01)i, *F16F1/02*(2006.01)i

According to International Patent Classification (IPC) or to both national classification and IPC

**B. FIELDS SEARCHED**

Minimum documentation searched (classification system followed by classification symbols)
C22C38/00, B60G21/055, C21D9/02, C22C38/58, C22C38/60, F16F1/02

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-185109 A  (JFE Bars & Shapes Corp.), 26 August 2010 (26.08.2010), claims 1, 2; paragraphs [0001], [0017], [0020], [0030], [0036] to [0038] & EP 2397571 A1          & WO 2010/092992 A1 & KR 10-2011-0104117 A    & CN 102317493 A | 1-9 |
| A | JP 2003-105485 A  (Nippon Steel Corp.), 09 April 2003 (09.04.2003), paragraphs [0001], [0002] (Family: none) | 1-9 |
| A | JP 6-93339 A  (Sumitomo Metal Industries, Ltd.), 05 April 1994 (05.04.1994), paragraphs [0001], [0005] (Family: none) | 1-9 |

| [X] Further documents are listed in the continuation of Box C. | [ ] See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 August, 2012 (02.08.12) | 14 August, 2012 (14.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/062106 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | JP 2007-284774 A  (JFE Bars & Shapes Corp.), 01 November 2007 (01.11.2007), claims 1 to 5; paragraph [0012] (Family: none) | 1-9 |
| A | JP 2002-97547 A  (NKK Bars & Sharpers Co., Ltd.), 02 April 2002 (02.04.2002), claims 1 to 3 (Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   JP 2010185109 A